# EUROPÄISCHE PATENTSCHRIFT

(11) **EP 2 741 868 B1**
(45) Veröffentlichungstag und Bekanntmachung des Hinweises auf die Patenterteilung: **03.02.2016**
(21) Anmeldenummer: 12768705.1
(22) Anmeldetag: 10.08.2012
(51) Int. Cl.: B07C 5/342

(54) **METALLSCHROTTSORTIERUNG**
SORTING OF SCRAP METAL
TRI DES DÉCHETS MÉTALLIQUES

(30) Priorität: 10.08.2011 DE 102011109940
(43) Veröffentlichungstag der Anmeldung: 18.06.2014
(73) Patentinhaber: PROASSORT GmbH, 58791 Werdohl (DE)
(72) Erfinder: PILLKAHN, Hans-Bernd, 58791 Werdohl (DE)
(74) Vertreter: Schöneborn, Holger
(86) Internationale Anmeldenummer: PCT/EP2012/003427
(87) Internationale Veröffentlichungsnummer: WO 2013/020712

(56) Entgegenhaltungen:
- WO-A1-95/17974
- DE-A1- 3 718 672
- US-A1- 2001 045 378

## Beschreibung

Die Erfindung betrifft ein Verfahren zur Aufarbeitung von Metallschrotten, bei dem eine spektroskopische Analyse der Metallschrottzusammensetzung durchgeführt wird, siehe z.B. US-A-2001/0045378 oder WO-A-95/17974.

Ein Großteil des heute verwendeten Stahls, insbesondere Flachstahls aus Feinblech oder Warmband, wird bei der Produktion oder bei der Verarbeitung zu Vorprodukten mit einer Beschichtung versehen, die den Stahl gegen Korrosion schützen soll. Besonders im Bereich der Automobilindustrie werden dabei häufig elektrolytisch oder im Schmelztauchverfahren verzinkte Stähle eingesetzt. Daneben kommen bei Feinblech auch organische Beschichtungen auf einer in der Regel vorher aufgebrachten Zinkschicht in Form von Nass- und Pulverlacksystemen oder applizierte Folien zum Einsatz, beispielsweise bei sogenannter weißer Ware, d. h. bei Haushaltsgeräten. Im Falle von Weißblech wird eine elektrolytisch aufgebrachte Zinnbeschichtung verwendet. Weißblech spielt insbesondere eine Rolle bei der Herstellung von Blechdosen für Lebensmittel, Getränke sowie im Bereich von Aerosolsprühdosen, wobei häufig eine Lackierung oder Folienbeschichtung der Weißblechdosen hinzukommt.

Die Wiederverwertbarkeit der im Stahlschrott gebundenen Rohstoffe in Form von Legierungsmetallen, ist sowohl in ökologischer als auch in wirtschaftlicher Hinsicht wünschenswert. Problematisch macht sich jedoch bemerkbar, dass der steigende und mittlerweile häufig hohe Anteil an Legierungsmetallen im Stahlschrott eine gezielte Wiederverwertung der Schrotte erschwert. Im Bereich der Gießereiindustrie wird z. B. zur Herstellung von hochfestem und zähem Guss zum Einsatz in der Automobil- und Windenergieindustrie ein Stahlschrott benötigt, der arm an sog. Perlitbildnern wie Mangan, Molybdän und Vanadium ist. Erschwerend kommt hinzu, dass ein Zinkbelag des Stahlschrotts unerwünscht ist. Bei der Herstellung von Tiefziehstählen für die Automobilindustrie dienen diese Perlitbildner aber gerade dazu, die Festigkeit des Stahls zu steigern. Die Oberfläche wird durch Zinkauftrag vor Korrosion geschützt. Das hohe Schrottaufkommen der Feinblechverarbeitung kann so in zunehmendem Maße nicht mehr als eigentlich unentbehrlicher Rohstoff für die Gießereiindustrie eingesetzt werden. Andere Begleitelemente des Stahlschrotts wie Kupfer oder Zinn sind auf der einen Seite Stahlschädlinge, weil metallurgisch nicht entfernbar und von negativer Wirkung auf die mechanischtechnologischen Eigenschaften, auf der anderen Seite aber hervorragende Perlitbildner für Gusseisen mit Lamellengraphit.

Zurzeit werden Legierungsbestandteile des Stahlschrotts, die nicht zur Zielanalyse passen, während der Stahlherstellung - soweit metallurgisch überhaupt möglich - in die Schlacke überführt. Auf diese Weise werden erhebliche Mengen eigentlich wertvoller Rohstoffe faktisch vernichtet bzw. in einer Form gebunden, die eine wirtschaftliche Wiederverwertung nicht erlaubt.

Sinnvoll wäre ein Verfahren, mit dem die zu recycelnden Stahlschrotte vor dem Einsatz als Sekundärrohstoff in der eisenerzeugenden Industrie so nach Legierungsbestandteilen sortiert werden können, dass die Zusammensetzung weitgehend der Zusammensetzung des vollständig aus den Stahlschrotten oder unter wesentlicher Beifügung von Stahlschrotten neu hergestellten Gusseisens oder Stahls entspricht. Dies ist jedoch nach dem Stand der Technik normalerweise allenfalls dann möglich, wenn der gesamte aufzuarbeitende Stahlschrott im Wesentlichen aus einer definierten Schrottentfallstelle stammt, wo die Schrotte bereits bei Entstehung getrennt gehalten werden. In der Praxis ist jedoch die strikte Trennung der Schrotte ab dem Zeitpunkt der Entstehung die Ausnahme.

In der Schrottrecyclingbranche bemüht man sich, Schrotte auf den Schrotthöfen nach Legierungsgehalten zu sortieren. Dabei werden die als sortenrein vermuteten Schrotte getrennt gehalten und in Stichproben mit tragbaren optisch arbeitenden Analysegeräten nach Legierungsgehalten analysiert. Von Neuschrotten unsicherer Herkunft werden ebenfalls Stichprobenanalysen genommen. Eine solche Analyse ist jedoch nur durchführbar, wenn die Oberfläche der Schrottstücke frei von metallischen oder organischen Beschichtungen ist. Derartige Beschichtungen werden daher Stück für Stück zunächst mit einem Handschleifgerät entfernt, bevor die Analyse der Legierungszusammensetzung auf der dann eisenblanken Oberfläche stattfinden kann. Die Probennahme ist zeitaufwändig, teuer und wegen der geringen Anzahl der Proben im Verhältnis zur Gesamtschrottmenge statistisch unzureichend.

Noch problematischer ist die Wiederverwertung von Altschrotten. Diese werden meist zur Erhöhung des Schüttgewichts der Schrotte geschreddert, so dass Transportkosten gespart werden können, oder sie werden geschert, um den Einsatz über dann kurze Schrottlängen zu ermöglichen. Eine auch statistisch unzureichende Analyse der Schredder- und Scherenschrotte auf Legierungsbestandteile im Stahl ist jedoch zurzeit faktisch unmöglich, weshalb häufig insbesondere bei Schredderschrott lediglich untergeordnete Einsatzzwecke wie die Wiederverwertung als Bewehrungsstahl in Frage kommen. Bewehrungsstähle machen in Deutschland jedoch nur noch einen untergeordneten Anteil an der Stahlerzeugung aus. Die überwiegende Menge an Schredderschrotten wird deshalb exportiert und so dem Rohstoffkreislauf entzogen.

Aus dem Dokument DE 37 18 672 A1 ist ein Verfahren bekannt, bei dem Metallteile analysiert werden, wobei ein Sortiersignal zur Aktivierung einer Sortiereinrichtung erzeugt wird. Die Analyse erfolgt mit Hilfe eines gepulsten Laserstrahls. Im Falle von mit einer Beschichtung versehenen Teilen kann vor der eigentlichen Analyse Oberflächenmaterial mittels Laser-Pulsen abgedampft werden. Bei der Sortierung wird lediglich zwischen verschiedenen Metallen unterschieden, d. h. es werden beispielsweise Aluminiumteile von Kupferteilen getrennt. Das Verfahren mag für sehr dünne Beschichtungen und geringen Durchsatz durch die Sortieranlage anwendbar sein, beispielsweise bei schmelztauchverzinkten Schrotten mit einer Zinkauflage > 10 µm und einer Sortierleistung von stündlich vielen Tonnen erscheint dieses Verfahren jedoch weder technisch noch wirtschaftlich durchführbar.

Es stellt sich somit die Aufgabe, ein Verfahren zur Verfügung zu stellen, bei dem Schrotte nach Legierungsgehalten effektiv und wirtschaftlich sortiert werden können, um die Schrotte anschließend, je nach Zusammensetzung, der jeweils wirtschaftlichsten und Rohstoff effizientesten Verwertungsmöglichkeit zuführen zu können.

Diese Aufgabe wird erfindungsgemäß gelöst durch ein Verfahren zur Aufarbeitung von Metallschrotten mit folgenden Schritten:
- Behandlung der Metallschrotte mit zumindest einer Flüssigkeit zur Ablösung von Oberflächenbeschichtungen,
- spektroskopische Analyse der Metallschrottzusammensetzung,
- Sortierung der Metallschrotte in Abhängigkeit von der Metallschrottzusammensetzung und
- Aufarbeitung der Flüssigkeit zur Rückgewinnung von in den Oberflächenbeschichtungen enthaltenen Metallen.

Erfindungsgemäß wird ein Verfahren zur Verfügung gestellt, mit dessen Hilfe eine automatisierte und genaue Analyse und Sortierung von Metallschrottstücken, insbesondere Stahlschrottstücken, in Abhängigkeit von der Zusammensetzung möglich ist. Dabei können auch geringe Mengen von Legierungsbestandteilen berücksichtigt werden, die vorzugsweise unterhalb von 800 ppm liegen können. Weiter bevorzugt werden auch Mengen unterhalb von 500 ppm, insbesondere unterhalb von 100 ppm, besonders bevorzugt unterhalb von 10 ppm bei der Analyse erfasst und bei der Sortierung berücksichtigt. Dies lässt sich u. a. dadurch erreichen, dass an jedem Schrottstück mehrere Messungen durchgeführt und statistisch ausgewertet werden, wobei geeignete Positionen für die Messungen zuvor festgelegt wurden. Dies führt zu einer besonders genauen Analyse der Zusammensetzung. Anders als im Stand der Technik wird somit nicht nur eine grobe Sortierung zwischen Schrottstücken aus einem bestimmten Metall einerseits und Schrottstücken aus einem anderen Metall andererseits durchgeführt, vielmehr wird gerade auch die Tatsache berücksichtigt, dass Schrott in der Regel verschiedene Legierungsbestandteile aufweist, deren Gehalt bei der Wiederverwertung bestimmte Obergrenzen nicht überschreiten darf bzw. innerhalb eines vorgegebenen Bereichs liegen muss. Auf diese Weise werden die anfallenden Schrottmengen in deutlich stärkerem Maße als bisher auch qualitativ hochstehenden Wiederverwertungen zugänglich gemacht, während bislang wiederverwerteter Schrott, insbesondere der Altschrott, aufgrund der Zusammensetzung nur für untergeordnete Einsatzzwecke eingesetzt werden konnte.

In vorteilhafter Weise werden erfindungsgemäß mehrere Prozesse miteinander kombiniert. So ist eine Behandlung von Metallschrotten mit einer Flüssigkeit zur Ablösung der Oberflächenbeschichtungen von den Metallschrotten sinnvoll, um auf diese Weise metallische Beschichtungen ablösen und die Metalle anschließend rückgewinnen zu können. Dies betrifft zuvorderst das in erheblichen Mengen bei der Herstellung von verzinkten Schrotten eingesetzte Zink. Überraschend konnte nunmehr festgestellt werden, dass die Ablösung der Oberflächenbeschichtung eine so weitgehende Freilegung des darunter befindlichen Metalls bewirkt, dass anschließend eine Analyse mit Hilfe der Spektroskopie zur Ermittlung der Schrottzusammensetzung erfolgen kann, ohne dass eine zusätzliche Oberflächenbehandlung, beispielsweise eine mechanische mit einem Schleifgerät o. ä. notwendig ist. Das ausgesprochen aufwändige Herausgreifen einzelner Schrottstücke und Behandeln mit einem Handschleifgerät, bevor die blanke Oberfläche der Analyse unterzogen werden kann, ist somit entbehrlich. Ggf. kann vor der Analyse noch eine Trocknung der mit der Flüssigkeit behandelten Metallschrotte durchgeführt werden, um anhaftende Flüssigkeitsreste zu entfernen. Auch im Bereich der geschredderten Altschrotte, bei denen eine Freilegung der Oberfläche bislang schon deshalb kaum erfolgen konnte, weil ein Anschleifen der Oberfläche von vielen Kleinpartikeln nicht möglich war, lassen sich mit Hilfe des erfindungsgemäßen Verfahrens analysieren. Gleichzeitig ist das Verfahren auch noch besonders wirtschaftlich, da die Freilegung einer blanken, zur Analyse geeigneten Oberfläche durch Behandlung der Metallschrotte mit einer Flüssigkeit anstelle der Bearbeitung mit einem Schleifgerät zusätzlich die Möglichkeit eröffnet, die in den Oberflächenbeschichtungen enthaltenen Metalle wiederzugewinnen und erneut einzusetzen. Der Schritt der Aufarbeitung der Flüssigkeit zur Rückgewinnung von in den Oberflächenbeschichtungen enthaltenen Metallen macht das Verfahren wirtschaftlich besonders interessant, ist allerdings für die Durchführung der erfindungsgemäßen Sortierung des Schrotts nicht unbedingt erforderlich, weshalb auch ein entsprechendes Verfahren ohne diesen Schritt als erfindungsgemäß aufzufassen ist.

Die Behandlung der Schrottstücke mit einer oder mehreren Flüssigkeiten (Beizung) kann räumlich und zeitlich von den nachfolgenden Schritten zur stückbezogenen Sortierung getrennt sein. Es hat sich nämlich überraschenderweise gezeigt, dass nach der Beizung meist noch ein Restölfilm auf der Schrottoberfläche derart verbleibt, dass ein Rosten der Oberfläche zeitlich stark verzögert wird und der entstehende Rostbelag den nachfolgenden Analyseschritt in keiner Weise negativ beeinflusst.

Bei den Oberflächenbeschichtungen handelt es sich insbesondere um die in großem Umfang verwendeten Metalle Zink und Zinn. Insbesondere die Ablösung einer Zinkbeschichtung kann mit Hilfe einer sauren oder einer alkalischen Lösung erfolgen, wobei die Verwendung einer sauren Lösung aufgrund der deutlich rascheren Ablösung der Beschichtung bei niedrigeren Temperaturen bevorzugt ist. Wie in den internationalen Patentanmeldungen WO 2011/038746 A1 und WO 2010/034465 A1 beschrieben wurde, kann dabei auch die bei der sauren Entzinkung an sich auftretende unerwünschte Mitlösung von Eisen durch Zugabe eines Öls oder durch Vorbeladung der sauren Lösung mit Zinkionen weitgehend unterdrückt werden. Es hat sich nämlich gezeigt, dass die Gegenwart von Zinkionen in der sauren Lösung zu einer deutlichen Beschleunigung der Zinkauflösung führt, so dass die Kontaktzeit mit dem zu entzinkenden Schrott so kurz gehalten werden kann, dass die Eisenauflösung praktisch gerade erst begonnen hat. Durch die Kopplung des Ablöse-/Beiz- und des Analyseprozesses kann ein kontinuierliches Signal über die Restzinkbelegung der Schrottoberfläche an den Beizprozess gegeben werden, so dass dieser insbesondere hinsichtlich der Kontaktzeit zwischen Schrott und Flüssigkeit entsprechend angepasst werden kann. Über das Signal kann z. B. die Transportgeschwindigkeit in einem Schwingförderer, der als Beizanlage dient, über diese wiederum die Beizzeit und über diese wiederum der Eiseneintrag gesteuert werden.

Darüber hinaus sind aus dem Stand der Technik Möglichkeiten zur Entfernung des Eisens aus einer Lösung bekannt, beispielsweise eine Fällung in Form des Hydroxids, in Form von Jarosit, Goethit oder Hämatit. Die entsprechenden Verfahren sind z. B. aus Ullmanns Enzyklopädie Technische Chemie, 4. Aufl., Band 24, S. 602 ff. bekannt. Als Säure wird insbesondere Schwefelsäure verwendet; die Konzentration der Schwefelsäure beträgt typischerweise 100-600 g/l, insbesondere 150-500 g/l, beispielsweise ca. 250 g/l. Diese wird in einem Temperaturbereich von typischerweise 15 bis 70°C, vorzugsweise 40 bis 60°C eingesetzt, wobei in der Regel eine Kontaktzeit der sauren Lösung mit dem Stahlschrott von wenigen Minuten ausreichend ist. In Versuchen hat sich sogar eine Kontaktzeit von 60 s als ausreichend herausgestellt.

Möglich ist aber auch eine Entzinkung in alkalischem Milieu, wie sie bspw. in der europäischen Patentschrift EP 0 996 774 B1 beschrieben wird. Typischerweise wird eine Natrium- oder Kaliumhydroxidlösung verwendet, wobei die Menge an Natrium- bzw. Kaliumhydroxid vorteilhafterweise mindestens 15 Gew.-% beträgt, um eine ausreichend schnelle Ablösung der Zinkschicht zu gewährleisten. Die Reaktionstemperatur sollte > 75°C liegen, damit die Reaktion innerhalb von max. 2 h ablaufen kann. Um die Auflösungsgeschwindigkeit des Zinks weiter zu erhöhen, kann die Ablösung der Zinkschicht als galvanische Korrosion erfolgen, d. h. das Zink dient als Anode, an der die das Zink in Zinkionen überführende Oxidation stattfindet, während ein zweites, in der alkalischen Lösung stabiles Metall als Kathode dient, an der sich Wasserstoff entwickeln kann.

Die verzinkten Schrottstücke sind vorzugsweise vorklassiert, wobei insbesondere eine Klassierung nach Oberflächenbeschichtung und/oder äußerer Beschaffenheit sinnvoll ist. Unter Klassierung wird erfindungsgemäß verstanden, dass die Schrottstücke entsprechend vorsortiert sind, wobei nicht in jedem Fall ein vorgelagerter Sortierschritt notwendig ist. Wenn die Teile vergleichbarer Herkunft sind, es sich beispielsweise um Haushaltsgeräte- oder Kraftfahrzeugneuschrott handelt, kann ein gesonderter, vorgelagerter Sortierschritt entfallen. Anderenfalls ist eine grobe Vorsortierung sinnvoll. Auf diese Weise wird sichergestellt, dass bei der Behandlung der Schrottstücke mit einer bestimmten Flüssigkeit oder auch einer Abfolge von Flüssigkeiten die Oberflächenbeschichtungen bei sämtlichen Schrottstücken so weit entfernt werden, dass im Analyseschritt eine Ermittlung der Zusammensetzung möglich ist. Für den Fachmann ist es bspw. ohne Weiteres möglich zu entscheiden, bei welcher Art Schrott eine Behandlung mit einer sauren oder alkalischen Lösung ausreichend ist und bei welchem Schrott zuvor eine Behandlung mit einem organischen Abbeizmittel wie Methylenchlorid durchgeführt werden sollte.

An die Ablösung der Oberflächenbeschichtungen schließt sich zweckmäßigerweise ein Schritt der Vereinzelung der Schrottstücke an. Auf diese Weise wird dafür gesorgt, dass sich im Analyseschritt die Zusammensetzung für jedes einzelne Schrottstück bestimmen lässt, ohne dass die Analyse einzelner Teile durch andere Teile behindert wird.

Gemäß einer bevorzugten Ausführungsform werden, sinnvollerweise nach dem Schritt der Vereinzelung der Schrottstücke, die Positionen der Schrottstücke sowie räumliche Informationen, insbesondere die Form, zu den Schrottstücken bestimmt. Im Anschluss daran findet anhand der bestimmten Positionen und der räumlichen Informationen eine automatisierte Festlegung der Stellen an den Schrottstücken statt, an denen eine spektroskopische Analyse der Zusammensetzung möglich ist. Unter Position wird insbesondere die Position des Schrottstücks auf der Fördereinrichtung verstanden. Wenn die Schrottstücke auf der Fördereinrichtung bewegt werden, ändert sich selbstverständlich die Position des Schrottstücks im Raum, nicht jedoch im Verhältnis zur Fördereinrichtung.

Die Bestimmung der Position der Schrottstücke kann mit Hilfe eines 3D-Scanning-Schritts erfolgen, der auch dazu dienen kann, räumliche Informationen zu den Schrottstücken zu gewinnen. Es ist somit möglich, die Form der Schrottstücke zu erfassen. Die räumlichen Informationen zu den Schrottstücken, insbesondere die Form, wird automatisch daraufhin ausgewertet, an welchen Positionen eine spektroskopische Analyse problemlos möglich ist. Auf diese Weise kann die Analyse deutlich beschleunigt werden, da die Zahl nicht erfolgreicher Analyseschritte minimiert wird. 3D-Scanning-Technologien, zumeist mit Hilfe eines Lasers ausgeführt, sind dem Fachmann aus dem Stand der Technik hinlänglich bekannt und werden vielfältig eingesetzt, beispielsweise zur Bestimmung der Form von Zahnbögen, beim Rapid Prototyping etc.. Lediglich beispielhaft wird auf den Übersichtsartikel von W. R. Scott, G. Roth, ACM Computing Surveys, Vol. 35, 2003, S. 64 - 96 "View Planning for Automated Three-Dimensional Object Reconstruction and Inspection" verwiesen.

Anstatt Position und Form mit Hilfe von 3D-Scanning zu erfassen, sind auch andere Möglichkeiten denkbar. Beispielsweise kann die Position des Schrottstücks durch elektromagnetische Induktion bestimmt werden. Hierzu können Spulen vorgesehen sein, beispielsweise unterhalb der Transportbänder, die zusammen mit einem Kondensator einen Schwingkreis bilden, so dass die Position eines Schrottstücks elektronisch erfasst wird. Vorrichtungen, bei denen mit Hilfe von elektromagnetischer Induktion die Gegenwart eines metallischen Gegenstandes erfasst werden kann, sind dem Fachmann grundsätzlich bekannt.

Die Gewinnung von räumlichen Informationen zu den Schrottstücken ist auch dadurch möglich, dass über einen (gepulsten) Laser parallel zur Transportrichtung eine Höhenlinie jedes Schrottstücks über die Lichtlaufzeit ermittelt wird. Dies dient dazu, bei Schrottstücken, die in sich oder von Stück zu Stück eine starke Höhendifferenz aufweisen, den nachfolgenden Analysevorgang so vorzubereiten, dass ein lichtoptisches Verfahren sich zur eigentlichen Messung genügend präzise fokussieren kann. Die erhaltenen räumlichen Informationen werden dazu verwendet, die Stellen festzulegen, an denen eine Analyse der Stahlschrottzusammensetzung im Folgeschritt stattfindet. Durch die Ermittlung der Höhenlinie wird die Taktzeit der Messvorgänge erhöht und die Messgenauigkeit gesteigert. Zudem wird so der Einfluss etwaiger Relativbewegungen der Schrottstücke relativ zum Transportband messtechnisch weitgehend eliminiert.

Für den Fall, dass sich einzelne Bestandteile des Schrotts bei der spektroskopischen Analyse als nicht analysierbar erweisen, beispielsweise weil es sich um Fremdteile aus anderen metallischen Werkstoffen oder Kunststoff oder um Schrottstücke handelt, bei denen die Ablösung der Oberflächenbeschichtung durch Behandlung mit der zumindest einen Flüssigkeit nicht erfolgreich war, können diese im Anschluss an die spektroskopische Analyse automatisch aussortiert und von der eigentlichen Sortierung ferngehalten werden. Eine Minderung der Qualität der Sortierfraktionen wird auf diese Weise ausgeschlossen.

Die Behandlung der Schrottoberfläche mit der Flüssigkeit kann sowohl in der Form erfolgen, dass der Metallschrott durch ein entsprechendes Tauchbecken geführt wird (Tauchbeizen), als auch in der Form, dass die Metallschrottoberfläche mit der Flüssigkeit besprüht wird (Sprühbeizen). Das Sprühbeizen, beispielsweise auf einem Schwingförderer, hat dabei den Vorteil, dass das Verfahren kontinuierlich durchgeführt werden kann, ohne dass von Zeit zu Zeit der Inhalt eines gesamten Tauchbeckens erneuert werden muss. Im Falle des Sprühbeizens sollte die Flüssigkeit aufgefangen werden, damit eine Aufarbeitung möglich ist.

Der Weitertransport des Schrotts kann mit Hilfe eines Schwingförderers erfolgen, in dem auch das Sprühbeizen selbst durchgeführt werden kann. Hierbei handelt es sich um mechanische Fördereinrichtungen für Schüttgüter unterschiedlicher Art, bei denen das zu transportierende Medium mittels Schwingungen bewegt wird. Ein typischer Schwingförderer in Form einer Schwingrinne weist eine Förderrinne auf, die sich zum Transport schräg nach oben in Förderrichtung und zurück bewegt, d. h. die Bewegung umfasst eine vertikale Komponente sowie eine horizontale Komponente in Förderrichtung. Auf diese Weise wird das Fördergut nach oben geworfen und trifft, nachdem sich die Förderrinne selbst zurückbewegt hat, in einem in Förderrichtung näher zum Austrittsende der Förderrinne liegenden Bereich wieder auf. Das am Eintrittsende auf die Förderrinne gebrachte Fördergut "ruckelt" somit nach und nach in Richtung Austrittsende, indem es durch die Schwingungen stets etwas nach oben und in Richtung Austrittsende geworfen wird. Eine weitere Form des Schwingförderers ist die Schüttelrutsche, bei der sich im Gegensatz zur oben beschriebenen Schwingrinne die Förderrinne lediglich hin- und herbewegt, d. h. nur in der Horizontalen, aber ohne Vertikalkomponente. Es findet somit kein "Wurf" des Förderguts statt, vielmehr rutscht dieses mit jeder Schwingung ein Stück weiter in Förderrichtung. Bei jeder Schwingung bewegt sich die Förderrinne zunächst in Förderrichtung, bevor sie am Ende dieser Bewegung ruckartig in die entgegengesetzte Richtung beschleunigt wird. Aufgrund der Trägheit der Schrottteile rutschen diese jeweils noch ein Stück weiter in Förderrichtung.

Das Sprühbeizen mit Hilfe eines Schwingförderers weist den Vorteil auf, dass sich die Lage der Schrottstücke stetig verändert, so dass sämtliche Seiten mit der Flüssigkeit benetzt werden. Um diesen Effekt zu verstärken, kann der Boden der Förderrinne mit einer oder mehreren Stufen oder sonstigen Hindernissen versehen sein, die dafür sorgen, dass eine Drehung der Schrottstücke erfolgt. Ein weiterer Vorteil der Behandlung des Schrotts innerhalb eines Schwingförderers besteht darin, dass sich während der Rüttelbewegung einzelne Schrottteile regelmäßig berühren und im Falle von scharfkantigen Teilen die Oberflächen gegenseitig verletzt werden. Derartige Verletzungen der Beschichtung vereinfachen die Ablösung, da es sich bei der Beschichtung häufig um eine Passivierungsschicht handelt. Ggf. kann die Förderrinne auch Durchlässe aufweisen, durch die die Flüssigkeit ablaufen kann. Sinnvollerweise wird die Flüssigkeit unterhalb der Förderrinne aufgefangen.

Die spektroskopische Analyse der Zusammensetzung der Schrottstücke erfolgt vorzugsweise in Bewegung, d. h. das gesamte Verfahren wird in einem kontinuierlichen Prozess durchgeführt. Vorzugsweise erfolgen auch weitere Verfahrensschritte wie die Bestimmung der Position und der räumlichen Informationen zu den Schrottstücken, die Aussortierung von Bestandteilen des Schrotts und die Sortierung der Schrottteile in Bewegung. Um für einen hohen Durchsatz zu sorgen, ist es sinnvoll, die Schrottstücke mit einer Geschwindigkeit von mindestens 2 m/s zu bewegen. Dabei können insbesondere Transport- oder Förderbänder zum Einsatz kommen.

Die Bewegung der Schrottstücke kann insbesondere mit Hilfe von Transport- oder Förderbändern sowie mit Hilfe von Schwingförderern, insbesondere Schwingrinnen oder Schüttelrutschen durchgeführt werden. Zur weiteren Erhöhung der Effizienz kann der zu behandelnde Schrott zweckmäßigerweise vor Inkontaktbringen mit der Flüssigkeit mechanisch vorbehandelt, insbesondere zerkleinert, geschreddert, aufgeraut und/oder in anderer Weise deformiert werden, um die Kontaktflächen zur Flüssigkeit zu vergrößern. Auch zerkleinerte Schrottstücke müssen jedoch noch eine Größe aufweisen, die die spektroskopische Analyse erlaubt.

Insbesondere bei Vorliegen von zusätzlichen organischen Beschichtungen können die Metallschrotte auch nacheinander mit mehreren verschiedenen Flüssigkeiten in Kontakt gebracht werden, um die verschiedenen Beschichtungen abzulösen. Beispielsweise kann zunächst eine Behandlung mit einem Abbeizmittel erfolgen, um eine organische Beschichtung zu entfernen, bevor die Kontaktierung mit der Schwefelsäure erfolgt, die für die Entzinkung der Metallschrotte sorgt. Als Abbeizmittel sind insbesondere organische Lösungsmittel, wie aliphatische oder aromatische Kohlenwasserstoffe, Chlorkohlenwasserstoffe, Alkohole, Glykolether, Dicarbonsäureester, Aceton u. ä. verwendbar. Besonders häufig verwendet wird Methylenchlorid. Je nach Reaktionsführung ist es aber auch möglich, die organische Beschichtung im Zuge der sauren oder alkalischen Behandlung mit zu entfernen, wobei sich herausgestellt hat, dass das Auflösen der metallischen Oberflächenbeschichtung dazu führt, dass darüber liegende sonstige Beschichtungen wie Lacke mit abgelöst werden. Vermutlich ist der Grund dafür darin zu sehen, dass die weiteren Beschichtungen von der Säure oder Lauge unterwandert werden und nach Auflösen der metallischen Beschichtung vom Stahlschrott ihren Halt verlieren und sich ebenfalls ablösen. In den meisten Fällen hat sich bereits die Behandlung mit der sauren oder alkalischen Lösung als ausreichend herausgestellt.

Die spektroskopische Analyse der Metallschrottzusammensetzung auf der dann blanken Oberfläche kann mit Hilfe von grundsätzlich im Stand der Technik bekannten Verfahren durchgeführt werden, insbesondere mit Hilfe der Laserspektroskopie, der Röntgenfluoreszenzspektroskopie oder der Photoelektronenspektroskopie. Besonders bevorzugt ist das Verfahren der Laser Induced Breakdown Spectroscopy (LIBS), bei der ein sehr kurzer, energiereicher Laserpuls auf die zu untersuchende Oberfläche fokussiert wird. Die dort stattfindende lokale starke Erhitzung des Materials führt zur Ausbildung eines lichtemittierenden Plasmas, wobei die Emission charakteristisch für das jeweilige Material ist. Ein anderes Verfahren ist die Laserablation, bei der durch den fokussierten Laserstrahl kleine Probenmengen abgetragen werden, welche mittels eines Gasstroms in einen Detektor gebracht und dort charakterisiert werden.

Im Falle der Röntgenfluoreszenzspektroskopie wird die Materialprobe durch eine hochenergetische Röntgenstrahlung angeregt, woraufhin die kernnahen Elektronen der in der Materialprobe vorhandenen Atome herausgeschlagen werden. Elektronen aus höheren Energieniveaus nehmen die Plätze der herausgeschlagenen Elektronen ein, die dabei frei werdende Energie wird in Form von elementspezifischer Fluoreszenzstrahlung abgegeben und kann mit Hilfe eines Strahlungsdetektors ausgewertet werden.

Im Falle der Photoelektronenspektroskopie wird zunächst ein Elektron im zu analysierenden Festkörper durch ein einfallendes Photon angeregt und zur Oberfläche transportiert, bevor es schließlich als Photoelektron austritt. Die Austrittsrichtung und die kinetische Energie der Photoelektronen erlaubt Rückschlüsse auf die Zusammensetzung des Festkörpers. Insbesondere kann es sich um Röntgen-Photoelektronenspektroskopie (XPS) handeln.

Es ist zweckmäßig, das Verfahren soweit wie möglich automatisiert ablaufen zu lassen. Dabei können die Metallschrottstücke am Sensor des Spektrometers vorbeigeführt werden, ebenso ist es jedoch möglich, umgekehrt den Sensor an den Metallschrottstücken vorbeizuführen. Vorzugsweise werden nicht lediglich, wie im Stand der Technik, Stichproben zur Abschätzung einer großen Grundgesamtheit genommen, vielmehr erfolgt eine Analyse, indem an jedem Schrottstück mehrere, vorzugsweise eine Vielzahl an Messungen durchgeführt werden, für die eine statistische Auswertung erfolgt, so dass Ausreißer in der Gesamtheit der Messergebnisse für ein Schrottstück eliminiert werden, um eine konkrete Aussage über die Zusammensetzung und die Legierungsbestandteile der einzelnen Schrottstücke treffen zu können. Der Abstand zwischen den einzelnen Punkten, an denen eine Messung durchgeführt wird, beträgt vorzugsweise wenige Millimeter. Selbst sehr kleine Mengen an Legierungszusätzen wie niedriglegierte Feinkornbildnergehalte sind auf diese Weise bestimmbar und können bei der Sortierung berücksichtigt werden. Neben der spektroskopischen Analyse der Zusammensetzung der Schrottstücke kann das Verfahren auch eine Bestimmung oder Abschätzung der Masse der einzelnen Schrottstücke umfassen.

Auch die anschließende ein- oder mehrstufige Sortierung sollte vorteilhafterweise automatisiert erfolgen, wobei bestimmte Sortierkriterien, je nach Verwendung des Metallschrotts, eingestellt werden. Insbesondere können Obergrenzen für unterschiedliche im Metallschrott enthaltene Metalle definiert werden, beispielsweise im Hinblick auf Zink, Zinn, Mangan, Kupfer, Chrom, Nickel, Molybdän, Vanadium und/oder Niob. Für manche Verwendungszwecke ist es von entscheidender Bedeutung, dass im wiederverwerteten Stahl bestimmte Elemente nicht oder allenfalls in sehr geringer Menge vorkommen. Selbstverständlich ist es ebenso möglich, eine Sortierung der Metallschrotte in Abhängigkeit davon durchzuführen, dass die Gehalte bestimmter Metalle jeweils in einer bestimmten Größenordnung liegen, um auf diese Weise sortierte Metallschrotte zu erhalten, deren Legierungszusammensetzung der gewünschten Legierungszusammensetzung möglichst ähnlich ist. Ebenso ist es möglich, sämtliche Schrotte, die Feinkornbildner enthalten, auszusortieren. Darüber hinaus ist es durch die Sortierung möglich, Schrottstücke einer bestimmten Zusammensetzung einer Sortierfraktion zuzuteilen, die eine ähnliche Zusammensetzung aufweist, wobei die Sortierfraktion wiederum Einsatzzwecken zugeführt wird, bei denen entsprechende Legierungszusammensetzungen gewünscht sind. Man erhält auf diese Weise sortierte Schrotte, deren Legierungszusammensetzung der gewünschten Legierungszusammensetzung, beispielsweise mit einem erhöhten Kupfergehalt, möglichst ähnlich ist. Auch ist es möglich, durch gezieltes Sortieren das bekannte Abbrandverhalten von Legierungsbestandteilen gezielt zu kompensieren, indem ein entsprechend höherer Anteil an diesen Legierungselementen bereits in der Schrottzusammensetzung berücksichtigt wird. Die Sortierung kann mit Hilfe gängiger Verfahren mechanisch oder pneumatisch erfolgen, beispielsweise indem kontinuierlich über ein Tansportband geförderte Metallschrotte je nach Bedarf geleitet und in unterschiedlichen bereitgestellten Behältnissen gesammelt werden. Vorteilhafterweise werden die Flüssigkeiten zur Ablösung der Oberflächenbeschichtungen zumindest teilweise wieder aufgearbeitet, um die in den Oberflächenbeschichtungen enthaltenen Metalle zurückzugewinnen. Dies betrifft zuvorderst das in erheblichen Mengen bei der Herstellung von verzinkten Schrotten eingesetzte Zink. Auf diese Weise wird das Verfahren besonders wirtschaftlich, da durch die Flüssigkeitsbehandlung nicht nur die spektroskopische Analysierbarkeit herbeigeführt, sondern auch eine Rückgewinnung von wertvollen Metallen erreicht wird. Aus der Flüssigkeit (dem Beizelektrolyten) ausgefälltes Metallsalz sollte dabei nur Spuren an organischer Verunreinigung enthalten. Es ist im Ablöseprozess (Beizprozess) hierfür durch geeignete Maßnahmen Sorge zu tragen. Überraschender Weise zeigt sich, dass sich unter den Umgebungsbedingungen ein über den Stahlschrott aus Schrottplätzen eingetragenes Korrosionsschutzöl oder ein Umformöl in der Größenordnung von einem Gramm Ölbelegung pro Quadratmeter Schrottfläche nach dem eigentlichen Beizprozess schnell und vollständig entmischt und an geeigneter Stelle abgezogen werden kann. Bei zu hohem erwarteten Öleintrag wie zum Beispiel bei unmittelbarem und nicht zwischenlagerndem Einsatz von Neuschrotten aus Stanzwerken kann jedoch die Schrottoberfläche vorlaufend entfettet werden. Neben Zink sind bspw. auch Zinn oder Chrom häufig verwendete und wertvolle Metalle, die auf diese Weise einer Wiederverwertung zugeführt werden können.

Die Verfahrensschritte der Behandlung der Schrottstücke mit zumindest einer Flüssigkeit, der Vereinzelung der Schrottstücke, der Bestimmung von Position und von räumlichen Informationen zu den Schrottstücken und/oder der spektroskopischen Analyse der Zusammensetzung der Schrottstücke können bei Bedarf auch ein- oder mehrfach wiederholt werden. Wenn sich beispielsweise bei der spektroskopischen Analyse ergibt, dass eine sinnvolle Sortierung angesichts des Zustandes der Oberfläche der Schrottstücke noch nicht möglich ist, kann der Zyklus der oben genannten Verfahrensschritte erneut durchlaufen werden. Dabei wird erneut eine Behandlung der Schrottstücke mit einer Flüssigkeit durchgeführt, um noch verbliebene Oberflächenbeschichtungen zu entfernen. Die Oberflächenbeschichtungen werden somit nacheinander entfernt. Die Auswahl der Flüssigkeit kann in Abhängigkeit von der spektroskopischen Analyse erfolgen, d. h. wenn bei der spektroskopischen Analyse festgestellt wurde, dass eine bestimmte Oberflächenbeschichtung nachwievor vorhanden ist, wird vorzugsweise automatisiert eine Flüssigkeit ausgewählt, die zur Entfernung der entsprechenden Beschichtung in der Lage ist. Anschließend erfolgt sinnvollerweise wiederum eine Vereinzelung der Schrottstücke, um die Analysierbarkeit ungestört von anderen Schrottstücken zu gewährleisten, gefolgt von der Bestimmung von Position und der räumlichen Informationen und der spektroskopischen Analyse. Der genannte Zyklus kann auch mehrfach durchlaufen werden, bis die spektroskopische Analyse ergibt, dass keine weitere Beschichtungsablösung mehr notwendig ist. Unter Umständen kann es auch ausreichend sein, lediglich die Schritte der Beschichtungsablösung und der spektroskopischen Analyse wiederholt durchzuführen, bis eine Sortierung möglich ist.

Gegebenenfalls können in den beschriebenen Zyklus der sich wiederholenden Verfahrensschritte auch die weiteren Schritte der Aussortierung von Bestandteilen des Schrotts und/oder der automatisierten Sortierung der Schrottstücke einbezogen werden. Es kann beispielsweise vorkommen, dass zwar einige Schrottstücke bereits fertig sortiert werden können, andere jedoch noch einer weiteren Behandlung bedürfen. In diesem Fall werden die zuletzt genannten Schrottstücke zurückgeführt, um erneut eine Flüssigkeitsbehandlung durchzuführen. Ebenso ist es möglich, nur einzelne Verfahrensschritte mehrfach durchzuführen, andere Verfahrensschritte hingegen nur einfach.

Die Vereinzelung der Schrottstücke kann in der Weise erfolgen, dass mehrere Module hintereinander angeordnet werden, die die Schrottstücke mit unterschiedlicher Geschwindigkeit bewegen. Beispielsweise kann ein erstes Modul die Schrottstücke mit relativ geringer Geschwindigkeit von z. B. 5 m/min bewegen. Von diesem Modul werden die Schrottstücke an ein weiteres Modul übergeben, das die Schrottstücke mit deutlich höherer Geschwindigkeit von z. B. 180 m/min bewegt. Auf diese Weise wird der Abstand zwischen den Schrottstücken vergrößert, d. h. es findet eine Vereinzelung statt, die die getrennte Analyse erlaubt. Bei Bedarf können zwischen den Modulen mit minimaler und maximaler Geschwindigkeit weitere Module angeordnet werden, durch die Schrottstücke mit mittleren Geschwindigkeiten bewegt werden. Eine typische Geschwindigkeitskaskade ist etwa: 5 m/min - 25 m/min - 100 m/min - 180 m/min.

Falls erforderlich kann nach Vereinzelung der Schrottstücke die Geschwindigkeit wieder reduziert werden, um die Bestimmung von Position und räumlichen Informationen, z. B. mittels 3D-Scanning, und die spektroskopische Analyse durchführen zu können, dies ist jedoch in der Regel nicht erforderlich. Bei den Modulen kann es sich sowohl um Schwingförderer als auch um Transportbänder handeln, wobei typischerweise die Module mit niedrigerer Geschwindigkeit Schwingförderer und die Module mit höherer Geschwindigkeit Transportbänder sind. Insbesondere kann es sich bei dem Modul mit minimaler Geschwindigkeit um einen Schwingförderer (Schwingrinne oder Schüttelrutsche) und bei dem Modul mit maximaler Geschwindigkeit um ein Transportband handeln. Der Einsatz von Schwingförderern zu Beginn der Vereinzelung ist auch insofern hilfreich, als miteinander lose verbundene, z. B. leicht verhakte Schrottstücke auf diese Weise voneinander getrennt werden können.

Insbesondere ist die Vereinzelung durch eine geeignete Kombination der Förderung in Schwingrinnen und Transportbändern möglich. Durch den Impuls jedes Schrottstückes in den Schwingrinnen, ausgelöst durch eine vertikale Beschleunigungskomponente vom Mehrfachen der Erdbeschleunigung, gelingt es, die Schrottstücke zuerst gleichmäßig auf der Schwingrinnenfläche zu verteilen. Anschließend können die Schrottstücke durch definierte Strömungshindernisse in vorgegebene Bahnen gezwungen werden. In Transportrichtung werden die Schrottstücke beschleunigt, wobei insbesondere ein Übergang von Schwingrinnen zu Transportbändern erfolgen kann. Durch die gezielte Beeinflussung der Geschwindigkeit in mehreren, vorzugsweise mindestens drei voneinander unabhängig geschwindigkeitsregelbaren Abschnitten bzw. Modulen, ist auf dem anschließenden Abschnitt, auf dem die Messungen stattfinden, die Vereinzelung erreicht. Der Abstand der Stücke voneinander auf den Bahnen richtet sich nach deren Geometrie und der zeitlichen Anforderung an die Analyseauswertungen, die insbesondere das Detektieren von sehr geringen Legierungsanteilen erfordert.

Die Abstimmung der Modulfördergeschwindigkeiten untereinander wird in Abhängigkeit an die Anforderungen an die Vereinzelung vorzugsweise über einen Prozessleitwert erfolgen. Dieser wird zweckmäßigerweise aus der ohnehin stattfindenden Form- und Positionsbestimmung der Schrottstücke mittels 3D-Scanning oder anderer Verfahren ermittelt.

Die Erfindung betrifft insbesondere die Aufarbeitung von Stahlschrotten, bei denen sich die eingangs geschilderte Problematik in besonderem Maße stellt und die in großen Mengen anfallen. Grundsätzlich ist das erfindungsgemäße Verfahren jedoch auch für andere Metallschrotte einsetzbar, bei denen das Recycling aufgrund von Oberflächenbeschichtungen erschwert ist. Zu nennen sind insbesondere Aluminium-, Zink- und Kupferschrotte. Es versteht sich, dass die Behandlung der Schrotte zur Ablösung der Oberflächenbeschichtungen je nach Art des Schrotts variiert.

Gemäß einer besonders bevorzugten Ausführungsform betrifft die Erfindung ein Verfahren zur Aufarbeitung von verzinkten und vorklassierten Stahlschrottstücken mit folgenden Schritten:
- Behandlung der Stahlschrottstücke in Abhängigkeit von der Klassierung mit zumindest einer Flüssigkeit zur Ablösung von Oberflächenbeschichtungen, wobei eine Flüssigkeit eine saure oder alkalische Lösung ist,
- Vereinzelung der Stahlschrottstücke,
- Bestimmung der Positionen der Stahlschrottstücke sowie von räumlichen Informationen zu den Stahlschrottstücken und automatisierte Festlegung der Stellen an den Stahlschrottstücken, an denen eine spektroskopische Analyse der Zusammensetzung möglich ist, anhand der ermittelten Positionen und räumlichen Informationen,
- spektroskopische Analyse der Zusammensetzung der Stahlschrottstücke auf eine Vielzahl von Legierungsbestandteilen, wobei an jedem Stahlschrottstück mehrere Messungen durchgeführt und automatisiert statistisch ausgewertet werden,
- automatisierte Aussortierung von Bestandteilen des Stahlschrotts, deren Oberfläche nach Behandlung mit der zumindest einen Flüssigkeit keine spektroskopische Analyse zulässt, und
- automatisierte Sortierung der Stahlschrottstücke nach Zusammensetzung, wobei die Sortierung in Abhängigkeit davon durchgeführt wird, dass die Gehalte bestimmter Legierungsbestandteile jeweils eine vorgegebene Obergrenze nicht überschreiten oder innerhalb eines vorgegebenen Bereichs liegen.

## Patentansprüche

1. Verfahren zur Aufarbeitung von Metallschrotten mit folgenden Schritten:
- Behandlung der Metallschrotte mit zumindest einer Flüssigkeit zur Ablösung von Oberflächenbeschichtungen,
- spektroskopische Analyse der Metallschrottzusammensetzung,
- Sortierung der Metallschrotte in Abhängigkeit von der Metallschrottzusammensetzung und
- Aufarbeitung der Flüssigkeit zur Rückgewinnung von in den Oberflächenbeschichtungen enthaltenen Metallen.

2. Verfahren nach Anspruch 1, **dadurch gekennzeichnet, dass** die Oberflächenbeschichtungen Zink oder Zinn enthalten.

3. Verfahren nach Anspruch 1 oder 2, **dadurch gekennzeichnet, dass** die Flüssigkeit eine saure oder alkalische Lösung ist.

4. Verfahren nach einem der Ansprüche 1 bis 3, **dadurch gekennzeichnet, dass** die spektroskopische Analyse mit Hilfe von Laserspektroskopie, Röntgenfluoreszenzspektroskopie oder Photoelektronenspektroskopie erfolgt.

5. Verfahren nach Anspruch 4, **dadurch gekennzeichnet, dass** die spektroskopische Analyse mit Hilfe von Laser Induced Breakdown Spectroscopy (LIBS) erfolgt.

6. Verfahren nach einem der Ansprüche 1 bis 5, **dadurch gekennzeichnet, dass** die Sortierung des Metallschrotts automatisiert erfolgt.

7. Verfahren nach einem der Ansprüche 1 bis 6, **dadurch gekennzeichnet, dass** die Sortierung des Metallschrotts in Abhängigkeit davon durchgeführt wird, dass die Gehalte bestimmter Legierungsbestandteile jeweils eine vorgegebene Obergrenze nicht überschreiten oder innerhalb eines vorgegebenen Bereichs liegen.

8. Verfahren nach Anspruch 7, **dadurch gekennzeichnet, dass** die Metalle, nach deren Obergrenze die Sortierung erfolgt, Zink, Zinn, Mangan, Kupfer, Chrom, Nickel, Molybdän, Niob und/oder Vanadium sind.

9. Verfahren nach einem der Ansprüche 1 bis 8, **dadurch gekennzeichnet, dass** die Metallschrotte Stahlschrotte sind.

10. Verfahren nach einem der Ansprüche 1 bis 9, **dadurch gekennzeichnet, dass** die spektroskopische Analyse der Zusammensetzung des Metallschrotts unter Bewegung der Schrottstücke, vorzugsweise mit einer Geschwindigkeit von mindestens 2 m/s, stattfindet.

11. Verfahren nach einem der Ansprüche 1 bis 10, **dadurch gekennzeichnet, dass** die Schrottstücke nach der Behandlung mit der zumindest einen Flüssigkeit vereinzelt werden.

12. Verfahren nach einem der Ansprüche 1 bis 11, **dadurch gekennzeichnet, dass** vor der spektroskopischen Analyse eine Bestimmung der Position der Schrottstücke sowie eine Bestimmung von räumlichen Informationen zu den Schrottstücken, insbesondere der Form erfolgt, wobei eine automatisierte Festlegung der Stellen an den Schrottstücken, an denen eine spektroskopische Analyse der Zusammensetzung möglich ist, anhand der ermittelten Positionen und räumlichen Informationen durchgeführt wird.

13. Verfahren nach einem der Ansprüche 1 bis 12, **dadurch gekennzeichnet, dass** bei der spektroskopischen Analyse an jedem Schrottstück mehrere Messungen durchgeführt und automatisiert statistisch ausgewertet werden.

14. Verfahren nach einem der Ansprüche 1 bis 13, **dadurch gekennzeichnet, dass** nach der spektroskopischen Analyse solche Bestandteile des Metallschrotts, deren Oberfläche nach Behandlung mit der zumindest einen Flüssigkeit keine spektroskopische Analyse zulässt, automatisiert aussortiert werden.

15. Verfahren nach einem der Ansprüche 1 bis 14, **dadurch gekennzeichnet, dass** die Schrottstücke nach Oberflächenbeschichtungen und/oder äußerer Beschaffenheit vorklassiert sind.

## Claims

1. Method for the processing of metal scrap comprising the following steps:
- Treatment of metal scrap with at least one fluid to remove surface coatings,
- spectroscopic analysis of the scrap metal composition,
- sorting of the metal scrap materials according to the composition of the scrap metal, and
- treatment of the fluid with a view to recovering the metal contained in the surface coatings.

2. Method according to claim 1, **characterized in that** the surface coatings contain zinc or tin.

3. Method according to claim 1 or 2, **characterized in that** the fluid is an acidic or alkaline solution.

4. Method according to any one of claims 1 to 3, **characterized in that** the spectroscopic analysis is performed by means of laser spectroscopy, X-ray fluorescence spectroscopy or photoelectron spectroscopy.

5. Method according to claim 4, **characterized in that** the spectroscopic analysis is performed by means of laser induced breakdown spectroscopy (LIBS).

6. Method according to any one of the claims 1 to 5, **characterized in that** sorting of the metal scrap is carried out in an automated fashion.

7. Method according to any one of claims 1 to 6, **characterized in that** the sorting of the metal scrap pieces is carried out depending on the requirement that the contents of certain alloying constituents do not exceed prescribed upper limits in each case or are situated within a predetermined range.

8. Method according to claim 7, **characterized in that** the metals the sorting of which is governed by the observance of upper limits are zinc, tin, manganese, copper, chrome, nickel, molybdenum, niobium, and/or vanadium.

9. Method according to any one of claims 1 to 8, **characterized in that** the metal scrap consists of steel scrap.

10. Method according to any one of the claims 1 to 9, **characterized in that** the spectroscopic analysis of the composition of the metal scrap takes place while the scrap pieces are moving, preferably at a speed of at least 2 m/s.

11. Method according to any one of claims 1 to 10, **characterized in that** the scrap pieces are segregated after the treatment with at least one fluid.

12. Method according to any one of the claims 1 to 11, **characterized in that** prior to the spectroscopic analysis a determination of the position of the scrap pieces as well as determination of the spatial information and in particular the shape/form of the scrap pieces take place, wherein on the basis of the positions so ascertained and spatial information acquired an automated determination of the locations on the scrap pieces is made where a spectroscopic analysis of the composition can be performed.

13. Method according to any one of the claims 1 to 12, **characterized in that** in the framework of the spectroscopic analysis several measurements are taken on each piece of scrap and evaluated statistically in an automated fashion.

14. Method according to any one of the claims 1 to 13, **characterized in that** after the spectroscopic analysis such components of the metal scrap are automatically sorted out, the surface of which after the treatment with the at least one fluid does not allow a spectroscopic analysis to be carried out.

15. Method according to any one of the claims 1 to 14, **characterized in that** the scrap pieces are pre-sorted with respect to the type of surface coating and/or their outer appearance.

## Revendications

1. Procédé pour le traitement de ferrailles métalliques, comportant les étapes suivantes :
- traitement des ferrailles métalliques avec au moins un liquide pour décoller les revêtements superficiels,
- analyse spectroscopique de la composition des ferrailles métalliques,
- tri des ferrailles métalliques en fonction de la composition des ferrailles métalliques, et
- traitement du liquide pour récupérer les métaux contenus dans les revêtements superficiels.

2. Procédé selon la revendication 1, **caractérisé en ce que** les revêtements superficiels contiennent du zinc ou de l'étain.

3. Procédé selon la revendication 1 ou 2, **caractérisé en ce que** le liquide est une solution acide ou alcaline.

4. Procédé selon l'une des revendications 1 à 3, **caractérisé en ce que** l'analyse spectroscopique est réalisée par spectroscopie laser, spectroscopie par fluorescence de rayons X ou spectroscopie de photoélectrons.

5. Procédé selon la revendication 4, **caractérisé en ce que** l'analyse spectroscopique est réalisée par spectroscopie de plasma induit par laser (Laser Induced Breakdown Spectroscopy, LIBS).

6. Procédé selon l'une des revendications 1 à 5, **caractérisé en ce que** le tri de la ferraille métallique a lieu d'une manière automatisée.

7. Procédé selon l'une des revendications 1 à 6, **caractérisé en ce que** le tri de la ferraille métallique s'effectue selon que les teneurs en chacun de certains constituants d'alliage ne dépassent pas une certaine limite supérieure ou se trouvent à l'intérieur d'une plage prédéfinie.

8. Procédé selon la revendication 7, **caractérisé en ce que** les métaux en fonction de la limite supérieure desquels est réalisé le tri sont le zinc, l'étain, le manganèse, le cuivre, le chrome, le nickel, le molybdène, le niobium et/ou le vanadium.

9. Procédé selon l'une des revendications 1 à 8, **caractérisé en ce que** les ferrailles métalliques sont des ferrailles d'acier.

10. Procédé selon l'une des revendications 1 à 9, **caractérisé en ce que** l'analyse spectroscopique de la composition de la ferraille métallique est réalisée au cours d'un déplacement des morceaux de ferraille, de préférence à une vitesse d'au moins 2 m/s.

11. Procédé selon l'une des revendications 1 à 10, **caractérisé en ce que** les morceaux de ferraille sont, après le traitement, individualisés à l'aide d'au moins un liquide.

12. Procédé selon l'une des revendications 1 à 11, **caractérisé en ce qu'**on procède avant l'analyse spectroscopique à une détermination de la position des morceaux de ferraille, ainsi qu'à une détermination d'informations spatiales concernant les morceaux de ferraille, en particulier leur forme, ce à l'occasion de quoi on procède, à l'aide des positions et des informations spatiales déterminées, à un établissement automatisé de la position des morceaux de ferraille sur lesquels est possible une analyse spectroscopique de la composition.

13. Procédé selon l'une des revendications 1 à 12, **caractérisé en ce que** plusieurs mesures sont effectuées et font l'objet d'une évaluation statistique automatisée lors de l'analyse spectroscopique de chaque morceau de ferraille.

14. Procédé selon l'une des revendications 1 à 13, **caractérisé en ce que**, après l'analyse spectroscopique, on trie d'une manière automatisée les constituants de la ferraille métallique dont la surface n'autorise aucune analyse spectroscopique après le traitement avec le ou les liquides.

15. Procédé selon l'une des revendications 1 à 14, **caractérisé en ce que** les morceaux de ferraille sont préclassés en fonction de leurs revêtements superficiels et/ou de leur état extérieur.
